# FASCICULE DE BREVET EUROPEEN

(11) **EP 2 880 115 B1**
(45) Date de publication et mention de la délivrance du brevet: **21.06.2017**
(21) Numéro de dépôt: 13759550.0
(22) Date de dépôt: 25.07.2013
(51) Int. Cl.: C09J 153/02, C09J 193/04, B32B 7/12, B32B 27/06, B29C 47/06, C08K 3/34, C09J 11/04, C08F 6/00, B29C 47/00, B29D 7/01, B29K 25/00, B29K 105/00, B32B 27/08, B32B 27/18, B32B 27/30, B32B 9/00, B32B 9/04, C09J 153/00

(54) **AUTO-ADHESIF THERMOFUSIBLE POUR EMBALLAGE REFERMABLE A PROPRIETES ORGANOLEPTIQUES AMELIOREES**
HEISSSCHMELZENDER DRUCKEMPFINDLICHER KLEBSTOFF FÜR EINE WIEDERVERSCHLIESSBARE VERPACKUNG MIT VERBESSERTEN ORGANOLEPTISCHEN EIGENSCHAFTEN
HOT-MELT PRESSURE-SENSITIVE ADHESIVE FOR A RECLOSABLE PACKAGING HAVING IMPROVED ORGANOLEPTIC PROPERTIES

(30) Priorité: 30.07.2012 FR 1257353
(43) Date de publication de la demande: 10.06.2015
(73) Titulaire: BOSTIK SA, 93210 La Plaine Saint Denis (FR)
(72) Inventeur: ROBERT, Christophe, F-60150 Thourotte (FR)
(74) Mandataire: Granet, Pierre
(86) Numéro de dépôt international: PCT/FR2013/000205
(87) Numéro de publication internationale: WO 2014/020243

(56) Documents cités:
- EP-A1- 2 133 444
- WO-A1-01/10966
- FR-A1- 2 965 213
- FR-A1- 2 965 272

## Description

La présente invention a pour objet une nouvelle composition auto-adhésive thermofusible extrudable destinée à la fabrication d'emballages (ou barquettes) refermables. Elle concerne également un film multicouche qui comprend une couche adhésive constituée par ladite composition, et qui présente des propriétés organoleptiques améliorées.

On connaît, notamment par les demandes WO 02/064694, WO 12/045950, et WO 12/045951 des compositions auto-adhésives thermofusibles extrudables destinées à une utilisation pour la fabrication d'emballages (ou barquettes) refermables.

Les barquettes refermables sont utilisées dans l'industrie agroalimentaire et la grande distribution pour conditionner des denrées alimentaires, notamment des produits frais. De tels emballages sont décrits par le brevet US 4673601 et la demande de brevet EP 1053952.

Après une première ouverture de l'emballage et consommation d'une partie du produit alimentaire qu'il contient, l'utilisateur peut manuellement refermer l'emballage de façon substantiellement hermétique et assurer par conséquent, le cas échéant après mise au réfrigérateur, la conservation de la portion restante du produit. Une succession de réouvertures et de refermetures est également possible.

Ces emballages comprennent en général un contenant (ou réceptacle) et un opercule formant couvercle, qui sont fixés l'un à l'autre hermétiquement par soudage.

Le réceptacle, plus ou moins profond et relativement rigide, est constitué d'une feuille multicouche (dite également complexe ou composite) ayant une épaisseur minimale de 200 µm en général comprise entre 200 et 1000 µm. Cette feuille est thermoformée de manière à présenter un fond plan sur lequel repose le produit alimentaire et un pourtour en forme de bande plane. Ce pourtour, généralement parallèle au fond, est lié par soudure à l'opercule, souple et plan, qui est constitué d'un film multicouche (qualifié également de complexe ou composite) d'épaisseur en général comprise entre 40 et 150 µm, et qui est désigné parfois par la dénomination de film d'operculage.

Lors de l'ouverture de l'emballage, le film d'operculage est séparé manuellement du réceptacle au niveau de la bande plane du pourtour. Cette opération laisse apparaître une couche adhésive au niveau de cette bande plane, tant sur la bande d'opercule que sur la bande de réceptacle qui étaient précédemment en contact. Ces 2 couches adhésives (continues ou discontinues) « dites filles » résultent de la rupture d'une couche adhésive initiale ou « mère » ou, éventuellement, de sa séparation (ou décollement) de l'une des 2 couches du film complexe multicouche qui lui sont adjacentes. La couche adhésive initiale est donc une des couches dudit film complexe multicouche qui est lui-même un élément compris soit dans la feuille composite qui constitue le réceptacle soit, éventuellement, dans le film d'operculage.

Les 2 couches adhésives filles qui sont présentes, après ouverture de l'emballage, sur les bandes situées sur le pourtour respectif du réceptacle et de l'opercule sont donc en regard l'une de l'autre. Ainsi, il suffit de repositionner l'opercule sur le réceptacle, conformément à leur position dans l'emballage avant ouverture, afin de remettre en contact les 2 bandes de couches adhésives filles. Une simple pression manuelle permet alors d'obtenir la refermeture de l'emballage.

La composition adhésive qui constitue les couches adhésives mère et filles est donc nécessairement un adhésif sensible à la pression (également dénommé auto-adhésif ou encore PSA, de l'anglais « Pressure Sensitive Adhesive »).

Les compositions auto-adhésives extrudables décrites dans les demandes précitées sont des compositions thermofusibles comprenant une résine tackifiante et un copolymère bloc styrénique incluant un bloc élastomère. Ce sont des substances solides à température ambiante qui ne contiennent ni eau ni solvant. Appliquées à l'état fondu, elles se solidifient lors de leur refroidissement, formant ainsi une couche adhésive qui assure la liaison entre les 2 couches minces de matériau polymérique thermoplastique à assembler, tout en offrant à l'emballage correspondant les propriétés avantageuses d'ouverture et de refermeture.

Par ailleurs, ces compositions auto-adhésives thermofusibles, qui sont préparées par mélange à chaud de leurs ingrédients, présentent en plus l'avantage de pouvoir être mises sous la forme de granulés (de taille comprise entre 1 et 10 mm) au moyen d'une étape d'extrusion réalisée directement à chaud après l'étape de mélange, par exemple au moyen d'une extrudeuse à 2 vis munie d'un outil de découpe du produit extrudé.

Grâce aux granulés ainsi obtenus, le film tricouche qui est constitué de la couche de composition auto-adhésive thermofusible et des 2 couches minces de matériau polymérique thermoplastique à assembler, peut être commodément fabriqué par co-extrusion, en alimentant par exemple un dispositif de soufflage de gaine par les matériaux constitutifs des 3 couches sous la forme de granulés de taille définie précédemment.

Toutefois, dans le cadre de l'amélioration constante des emballages de produits alimentaires proposés par l'industrie au consommateur, il apparaît à présent de plus en plus nécessaire d'envisager l'impact desdits emballages sur une possible altération des propriétés organoleptiques des denrées alimentaires emballées, et notamment sur un risque d'altération de leur goût et/ou de leur odeur (ou parfum), tout particulièrement dans le cas d'emballages hermétiques.

S'agissant des compositions auto-adhésives thermofusibles pour emballages refermables connues de l'art antérieur, on considère que cet impact peut résulter de la présence dans lesdites compositions de très faibles quantités -allant jusqu'à une limite maximale de 5 ppm- de composés organiques volatils de faible masse molaire (inférieure à 1000 Da) qui proviennent des impuretés présentes dans les matières premières : par exemple des résidus des monomères ou oligomères qui sont mis en oeuvre dans les réactions de polymérisation des copolymères blocs styréniques ou des résines tackifiantes.

On ne peut ainsi écarter le risque que, dans l'emballage final, des composés organiques volatils présents à l'état de traces dans la composition auto-adhésive thermofusible ne migrent à travers les couches de matériaux thermoplastiques du film complexe pour pénétrer dans la denrée alimentaire, et en modifier les propriétés organoleptiques. Ce risque peut d'autant moins être écarté si l'on considère que certaines personnes très sensibles aux sensations olfactives et/ou gustatives sont capables de détecter des traces allant jusqu'à 1 ppb de certaines substances.

La demande WO 01/10966 décrit une composition adhésive comprenant un polymère et une zéolithe hydrophobe ayant un diamètre de pore supérieur à 4 Angstroms, afin d'en éliminer les odeurs ou arômes indésirables. Toutefois cette composition adhésive est à base aqueuse et ne convient pas à la fabrication par extrusion à chaud du film tricouche mentionné précédemment.

La présente invention a pour buts de proposer une composition auto-adhésive thermofusible extrudable permettant de façon cumulative :
- de lier dans un film tricouche 2 couches minces de matériaux thermoplastiques, tout en offrant à ces 2 couches des propriétés d'ouverture et de refermeture, propres à l'utilisation dudit film pour la fabrication d'un emballage refermable,
- de fabriquer ledit film tricouche par un procédé industriel de co-extrusion à chaud des matériaux constitutifs de chaque couche sous la forme de granulés, et
- une diminution du risque d'altération des propriétés organoleptiques de la denrée alimentaire emballée, et plus particulièrement de son goût.

L'invention a donc pour objet en premier lieu une composition auto-adhésive thermofusible ayant un indice d'écoulement (ou MFI) allant de 0,01 à 100 g/10 minutes et comprenant :
- de 40 à 70 % d'un mélange a) de copolymères blocs styréniques comprenant au moins un bloc élastomère, ce mélange a) consistant en :
   - de 30 à 90 % en poids d'au moins un copolymère dibloc choisi dans le groupe comprenant les SI, SBI, SIB, SB, SEB, et SEP, et
   - de 10 à 70 % en poids d'au moins un copolymère tribloc choisi dans le groupe comprenant les SIS, SIBS, SBS, SEBS et SEPS ;
      la teneur en motifs styréniques totale dudit mélange a) variant de 10 à 40 % en poids ;
- de 25 à 55 % d'une ou plusieurs résines tackifiantes b) ayant une température de ramollissement comprise entre 5 et 140 °C ; et
- de 0,1 à 5 % d'une zéolithe hydrophobe c) constituée d'un alumino-silicate hydraté d'un métal alcalin ou alcalino-terreux dont le rapport molaire Si/Al est compris dans le domaine allant de 5 à 1000 ;
les pourcentages des ingrédients a), b) et c) étant exprimés en poids et relatifs au poids total de la composition auto-adhésive.

Outre ces pourcentages, tous les pourcentages utilisés de façon générale dans le présent texte pour désigner des quantités d'ingrédients correspondent, en l'absence d'indication contraire, à des pourcentages poids/poids.

Selon un mode de réalisation, la composition auto-adhésive thermofusible consiste essentiellement :
- de 40 à 70 % d'un mélange a) de copolymères blocs styréniques comprenant au moins un bloc élastomère, ce mélange a) consistant en :
   - de 30 à 90 % en poids d'au moins un copolymère dibloc choisi dans le groupe comprenant les SI, SBI, SIB, SB, SEB, et SEP, et
   - de 10 à 70 % en poids d'au moins un copolymère tribloc choisi dans le groupe comprenant les SIS, SIBS, SBS, SEBS et SEPS ;
      la teneur en motifs styréniques totale dudit mélange a) variant de 10 à 40 % en poids ;
- de 25 à 55 % d'une ou plusieurs résines tackifiantes b) ayant une température de ramollissement comprise entre 5 et 140 °C ; et
- de 0,1 à 5 % d'une zéolithe hydrophobe c) constituée d'un alumino-silicate hydraté d'un métal alcalin ou alcalino-terreux dont le rapport molaire Si/Al est compris dans le domaine allant de 5 à 1000 ;
les pourcentages des ingrédients a), b) et c) étant exprimés en poids et relatifs au poids total de la composition auto-adhésive.

L'indice d'écoulement (ou Melt Flow Index MFI) est mesuré à 190°C et pour un poids total de 2,16 kg, conformément à la condition d) de la norme ISO 1133. Le MFI est la masse de composition (préalablement placée dans un cylindre vertical) qui s'écoule en 10 minutes au travers d'une filière de diamètre fixé, sous l'effet d'une pression exercée par un piston chargé ayant le poids total de 2,16 kg. En l'absence de mention contraire les valeurs de MFI indiquées dans le présent texte ont été mesurées dans ces mêmes conditions.

Les compositions auto-adhésives thermofusibles ayant un MFI allant de 2 à 70 g/10 minutes sont plus particulièrement préférées.

Selon un autre mode de réalisation, la teneur en eau de la composition auto-adhésive thermofusible selon l'invention est inférieure à 1 %, de préférence à 0,5 % et encore plus préférentiellement inférieure à 0,1%.

### Description du mélange a) de copolymères blocs styréniques :

Les copolymères blocs styréniques compris dans le mélange a) sont constitués de différents monomères polymérisés, incluant au moins un bloc polystyrène, et sont préparés par des techniques de polymérisation radicalaire. Les copolymères tribloc incluent 2 blocs polystyrène et un bloc élastomère. Ils peuvent revêtir des structures diverses : linéaire, en étoile (également dénommée radiale), branchée ou encore en peigne. Les copolymères dibloc incluent 1 bloc polystyrène et 1 bloc élastomère.

Les copolymères blocs styréniques utilisables dans la composition auto-adhésive selon l'invention ont une masse molaire moyenne en poids Mw généralement comprise entre 50 kDa et 500 kDa et sont constitués de blocs de différents monomères polymérisés. En l'absence d'indication contraire, les masses molaires moyennes en poids M_{w} qui sont données dans le présent texte sont exprimées en dalton (Da) et sont déterminées par Chromatographie par Perméation de Gel, la colonne étant calibrée avec des étalons de polystyrène.

Les copolymères tri-bloc ont pour formule générale :

ABA (I)

dans laquelle :
- A représente un bloc non élastomère styrénique (ou polystyrène), et
- B représente un bloc élastomère qui peut être :
- le polyisoprène. Le copolymère bloc a alors pour structure : polystyrène-polyisoprène-polystyrène, et pour dénomination : SIS ;
- le polyisoprène suivi d'un bloc polybutadiène. Le copolymère bloc a alors pour structure : polystyrène-polyisoprène-polybutadiène-polystyrène, et pour dénomination : SIBS
- le polybutadiène. Le copolymère bloc a alors pour structure : polystyrène- polybutadiène- polystyrène, et pour dénomination : SBS ;
- le polybutadiène hydrogéné totalement ou en partie. Le copolymère bloc a alors pour structure: polystyrène-poly(éthylènebutylène)- polystyrène et pour dénomination : SEBS ;
- le polyisoprène hydrogéné totalement ou en partie. Le copolymère bloc a alors pour structure : polystyrène-poly(éthylènepropylène)- polystyrène et pour dénomination : SEPS.

Les copolymères di-bloc ont pour formule générale :

A-B (II)

dans laquelle A et B sont tels que définis précédemment.

Lorsque le mélange a) compris dans la composition auto-adhésive comprend plusieurs copolymères styréniques triblocs, ces derniers étant choisis dans le groupe comprenant les SIS, les SBS, les SEPS, les SIBS, les SEBS, il est bien entendu que lesdits triblocs peuvent appartenir à une seule ou à plusieurs de ces 5 familles de copolymères. Il en est de même, *mutatis mutandis*, pour les copolymères diblocs.

On préfère utiliser un mélange a) d'un copolymère tribloc et d'un copolymère dibloc ayant le même bloc élastomère, en raison notamment du fait que de tels mélanges sont disponibles commercialement.

Selon une autre variante de réalisation, la teneur en copolymère dibloc dans le mélange a) peut aller de 50 à 90 %, de préférence de 50 à 80 %, et encore plus préférentiellement de 55 à 80 %.

Selon un mode de réalisation particulièrement avantageux de la composition auto-adhésive thermofusible selon l'invention, a) est un mélange d'un copolymère tribloc SIS et d' un copolymère dibloc SI. Dans ce cas la teneur en motifs styréniques totale du mélange a) varie de préférence de 15 à 20 %.

Selon un autre mode de réalisation également avantageux de la composition auto-adhésive thermofusible selon l'invention, a) est un mélange d'un copolymère tribloc SBS et d' un copolymère dibloc SB. Dans ce cas la teneur en motifs styréniques totale du mélange a) varie avantageusement de 20 à 35 %.

Les copolymères triblocs compris dans la composition auto-adhésive ont de préférence une structure linéaire.

Les copolymères blocs styréniques à bloc élastomère, notamment de type SI et SIS, utilisables dans le mélange a) sont disponibles commercialement, souvent sous la forme de mélanges tribloc/dibloc.

Le Kraton^{®} D1113BT de la société Kraton et le Quintac^{®} 3520 de la société Zeon Chemicals sont des exemples de mélanges a) de SIS et SI.

Le Kraton^{®} D1113BT est un mélange dont la teneur en motifs styréniques globale est de 16 %, et qui est constitué de 45 % de copolymère tribloc SIS linéaire de M_{w} environ 250 kDa, et de 55 % de copolymère dibloc SI de M_{w} environ 100 kDa. Le Quintac^{®} 3520 est un mélange qui est constitué, respectivement, de 22 % et de 78 % de tribloc SIS (M_{w} environ 300 kDa) et de dibloc SI (M_{w} environ 130 kDa), et dont la teneur totale en motifs styréniques est de 15 %.

### Description de la résine tackifiante b) :

La ou les résines tackifiantes utilisables dans la composition auto-adhésive selon l'invention ont des masses molaires moyennes en poids M_{w} généralement comprises entre 300 et 5000 Da et sont choisies notamment parmi :
- (i) les colophanes d'origine naturelle ou modifiées, telles que par exemple la colophane extraite de la gomme de pins, la colophane de bois extraite des racines de l'arbre et leurs dérivés hydrogénés, deshydrogénés, dimérisés, polymérisés ou estérifiés par des monoalcools ou des polyols comme le glycérol ;
- (ii) des résines obtenues par hydrogénation, polymérisation ou copolymérisation (avec un hydrocarbure aromatique) de mélanges d'hydrocarbures aliphatiques insaturés ayant environ 5, 9 ou 10 atomes de carbone issus de coupes pétrolières ;
- (iii) des résines terpéniques résultant généralement de la polymérisation d'hydrocarbures terpéniques comme par exemple le mono-terpène (ou pinène) en présence de catalyseurs de Friedel-Crafts, éventuellement modifiées par action de phénols ;
- (iv) des copolymères à base de terpènes naturels, par exemple le styrène/terpène, l'alpha-méthyl styrène/terpène et le vinyl toluène/terpène.

La température (ou point) de ramollissement des résines tackifiantes utilisables dans la composition selon l'invention peut varier de 5 à 140 °C. La température de ramollissement est déterminée conformément au test normalisé ASTM E 28 dont le principe est le suivant. Un anneau en laiton de diamètre environ 2 cm est rempli de la résine à tester à l'état fondu. Après refroidissement à température ambiante, l'anneau et la résine solide sont placés horizontalement dans un bain de glycérine thermostaté dont la température peut varier de 5° C par minute. Une bille d' acier de diamètre environ 9,5 mm est centrée sur le disque de résine solide. La température de ramollissement est durant la phase de montée en température du bain à raison de 5°C par minute- la température à laquelle le disque de résine flue d'une hauteur de 25,4 mm sous le poids de la bille.

Selon une variante préférée, on utilise des résines tackifiantes aliphatiques, et encore plus préférentiellement des résines aliphatiques appartenant aux catégories (ii) ou (iii) pour lesquelles on peut citer comme exemples de résine disponible commercialement :
(ii) l'Escorez^{®} 1310 LC disponible auprès de Exxon Chemicals qui est une résine obtenue par polymérisation d'un mélange d'hydrocarbures aliphatiques insaturés ayant environ 5 atomes de carbone, et qui possède une température de ramolissement de 94°C et un Mw d'environ 1800 Da ; l'Escorez^{®} 5400 également de la société Exxon Chemicals qui est une résine obtenue par polymérisation, puis hydrogénation d'un mélange d'hydrocarbures aliphatiques insaturés ayant environ 9 ou 10 atomes de carbone et qui possède une température de ramolissement de 100°C et un Mw d'environ 570 Da ;
(iii) la Dercolyte^{®} S115 disponible auprès de la société « Dérivés Résiniques et Terpéniques ou DRT) qui une résine terpène ayant une température de ramollissement de 115°C et un Mw d'environ 2300 Da.

### Description de la zéolithe c) :

Les zéolithes sont des minéraux microporeux d'origine naturelle ou synthétique qui sont constitués d'alumino-silicates hydratés de métaux alcalins ou alcalino-terreux, et qui sont communément utilisés comme adsorbants ou à des fins de séparation de mélanges de composés chimiques en tant que tamis moléculaire.

Au plan structural, les zéolithes sont des polymères inorganiques cristallins complexes, basés sur un enchaînement indéfini et tridimensionnel de structures quadri-connectées de AlO₄ et de SiO₄ tétraédriques, liées entre elles par un échange d'ions oxygène (oxyde). Chaque AlO₄ tétraédrique présent dans la structure apporte une forte charge négative qui est contrebalancée par un ou plusieurs cations d'un métal alcalin ou alcalino-terreux, par exemple Na⁺, Ca²⁺, Mg²⁺ ou K⁺. Ce sont ces enchaînements de tétraèdres qui génèrent les canaux et cavités constitutifs des micropores présents dans la zéolithe, de manière spécifique à chaque structure de zéolithe. Ces micropores ont une taille précise et uniforme, qui varie selon la structure de la zéolithe entre 3 et 13 Å, ce qui permet aux molécules de taille et de forme appropriées, et en général suffisamment petites, de pénétrer de manière sélective à l'intérieur desdits pores pour y être retenues par adsorption sur leur paroi interne.

Il a été trouvé que la présence dans la composition auto-adhésive selon l'invention de la zéolithe hydrophobe c) présentant un rapport molaire Si/Al compris entre 5 et 1000 permet une réduction significative de l'altération du goût d'un aliment placé au contact de ladite composition, impact dont on peut conjecturer qu'il est lié à la présence dans ladite composition de traces de composés organiques volatils de faible masse molaire, par exemple inférieure à 1000 Da.

Il en résulte par conséquent, a fortiori, une réduction significative du risque d'altération (ou de modification) du goût des aliments emballés durant leur stockage, risque qui serait associé à ces composés organiques volatils, et à leur éventuelle migration jusqu'à l'aliment, depuis la couche du film d'emballage constituée par ladite composition et à travers les autres couches dudit film complexe.

Par ailleurs, il a également été trouvé que l'incorporation dans la composition auto-adhésive de la zéolithe hydrophobe c), conserve de manière avantageuse les propriétés d'ouverture et de refermeture du film tricouche correspondant, rendant ainsi ce dernière apte à une utilisation pour la fabrication d'emballage refermable.

Le rapport molaire Si/Al de la zéolithe c) est avantageusement compris entre 5 et 500, de préférence entre 5 et 100, plus préférentiellement entre 5 et 20, et encore plus préférentiellement entre 5 et 15.

De manière encore plus préférée la zéolithe c) est constituée d'un alumino-silicate hydraté de sodium.

La zéolithe c) présente avantageusement un diamètre moyen de pores compris entre 5 et 10 Å et se présente sous la forme d'une poudre de particules solides, dont le diamètre médian est voisin de 4 µm.

Des zéolithes répondant à la définition donnée ci-dessus pour la zéolithe c) sont disponibles au plan commercial. On peut citer ainsi la zéolithe Abscents^{®} 2000 qui est disponible auprès de la société UOP et qui est une zéolithe hydrophobe constituée à raison d'au moins 95% en poids d'un alumino-silicate hydraté de sodium, dont le rapport molaire Si/Al est compris entre 5 et 15.

Selon un mode de réalisation plus particulièrement préféré, la composition auto-adhésive thermofusible selon l'invention comprend :
- de 50 à 65 % du mélange a) de copolymères blocs styréniques, encore plus préférentiellement de 55 à 65 %,
- de 30 à 50 % de résine tackifiante b), encore plus préférentiellement de 35 à 45 %, et de
- de 0,5 à 4 % de zéolithe hydrophobe c), encore plus préférentiellement de 1 à 3 %.

La composition adhésive peut également comprendre de 0,1 à 2 % d'un ou plusieurs stabilisants (ou anti-oxydant). Ces composés sont introduits pour protéger la composition d'une dégradation résultant d'une réaction avec de l'oxygène qui est susceptible de se former par action de la chaleur, de la lumière ou de catalyseurs résiduels sur certaines matières premières telles que les résines tackifiantes. Ces composés peuvent inclure des anti-oxydants primaires qui piègent les radicaux libres et sont généralement des phénols substitués comme l'Irganox^{®} 1010 de BASF. Les anti-oxydants primaires peuvent être utilisés seuls ou en combinaison avec d'autres anti-oxydants tels que des phosphites comme l'Irgafos^{®} 168 également de BASF, ou encore avec des stabilisants UV tels que des amines.

La composition auto-adhésive peut également comprendre un plastifiant, mais dans une quantité ne dépassant pas 5 %. On peut utiliser comme plastifiant une huile paraffinique et naphténique (comme le Primol^{®} 352 de la société ExxonMobil) comprenant éventuellement des composés aromatiques (comme le Nyflex 222B).

La composition adhésive peut enfin comprendre des charges minérales ou organiques, des pigments ou des colorants.

En vue de sa mise en oeuvre dans la fabrication de film multicouche, la composition adhésive selon l'invention se présente de préférence sous la forme de granulés de taille comprise entre 1 et 10 mm, de préférence entre 2 et 5 mm.

La composition adhésive peut être préparée, sous cette forme de granulés, par un procédé comprenant :
- une simple étape de mélange des ingrédients à chaud, entre 150 et 200°C, de préférence à environ 160°C, au moyen d'une extrudeuse à 2 vis munie d'un outil de découpe du produit extrudé en sortie de la filière, puis
- une étape de refroidissement, par exemple à température ambiante.

La présente invention a pour objet en second lieu un film multicouche comprenant 2 couches minces de matériau thermoplastique liées entre elles par une couche continue, caractérisé en ce que ladite couche a une épaisseur comprise entre 7 et 300 µm et est constituée par la composition auto-adhésive thermofusible telle que définie précédemment.

Selon une variante de l'invention, l'épaisseur de la couche adhésive liante est comprise entre 10 et 300 µm, de préférence entre 10 et 50 µm, et encore plus préférentiellement entre 10 et 30 µm.

Ladite couche adhésive permet la liaison entre une couche mince complexable et une couche mince scellable et sécable.

La couche complexable peut être complexée (ou contre-collée) avec d'autres couches pour la réalisation de l'emballage, par exemple avec une couche rigide pour la réalisation du réceptacle.

La couche scellable et sécable permet d'assurer, au niveau du pourtour le long duquel le réceptacle est lié par soudure à l'opercule, la première ouverture de l'emballage, au moyen d'une zone fragilisée sécable. Après ouverture, la zone fragilisée laisse apparaître :
- la couche adhésive mère sur la bande d'opercule et/ou sur la bande de réceptacle qui étaient en contact dans l'emballage fermé, et/ou
- 2 couches adhésives filles résultant de la rupture de la couche adhésive mère et localisées sur la bande d'opercule et/ou la bande de réceptacle.

Le matériau utilisable pour constituer les 2 couches minces liées entre elle par la couche adhésive liante est généralement un polymère thermoplastique (identique ou différent pour les 2 couches) tel que :
- le polyéthylène (PE),
- le polypropylène (PP),
- un copolymère à base d'éthylène et de propylène,
- le polyamide (PA),
- le polyéthylènetéréphtalate (PET), ou encore
- un copolymère à base d'éthylène comme par exemple un copolymère greffé anhydride maléïque, un copolymère d'éthylène et d'acétate de vinyle (EVA), un copolymère d'éthylène et d'alcool vinylique (EVOH), un copolymère d'éthylène et d'un acrylate d'alkyle tel que l'acrylate de méthyle (EMA) ou de butyle (EBA),
- le polystyrène (PS),
- le polychlorure de vinyle (PVC),
- le polyfluorure de vinylidène (PVDF),
- un polymère d'acide lactique (PLA), ou
- un polyhydroxyalkanoate (PHA).

Selon une variante de réalisation, le film multicouche selon l'invention est un film tricouche constitué par la couche adhésive et les 2 couches adjacentes.

Selon une autre variante de réalisation, le film multicouche selon l'invention comprend, outre les 2 couches minces adjacentes à la couche adhésive, d'autres couches minces nécessaires à la réalisation de l'emballage, comme par exemple :
- une couche rigide nécessaire à la tenue mécanique du réceptacle, ou
- une couche imprimable, ou encore
- une couche à effet barrière contre l'oxygène, la vapeur d'eau ou bien le monoxyde de carbone.

Les matériaux utilisables pour constituer lesdites couches peuvent être identiques ou différents et comprennent en général des polymères thermoplastiques qui peuvent être choisis parmi les polymères cités précédemment pour les 2 couches minces adjacentes.

L'épaisseur des 2 couches minces adjacentes à la couche adhésive et des autres couches mises en oeuvre dans le film multicouche selon l'invention est susceptible de varier dans un large domaine allant de 5 à 150 µm.

Le film multicouche selon l'invention peut être fabriqué par dépôt d'une quantité appropriée de composition selon l'invention sur une des 2 couches minces de matériau, puis application de la 2^{ème} couche mince et pressage à chaud. Il peut également être fabriqué par co-extrusion.

La présente invention concerne encore un procédé de fabrication du film multicouche tel que défini précédemment, caractérisé en ce qu'il comprend la co-extrusion de la composition auto-adhésive thermofusible avec les matériaux des 2 couches minces adjacentes.

De préférence, la composition auto-adhésive thermofusible ainsi que les matériaux constitutifs des 2 couches minces sont alimentés dans le dispostif de co-extrusion sous la forme de granulés de taille comprise entre 1 et 10 mm, de préférence entre 2 et 5 mm. La composition auto-adhésive mise en oeuvre dans le film multicouche selon l'invention permet, de façon particulièrement avantageuse, d'assurer à la fois les propriétés requises pour ledit film et la possibilité d'une présentation de ladite composition sous la forme des granulés précités. Les autres couches éventuellement comprises dans le film multicouche peuvent être obtenues soit par l'incorporation dans le dispositif de co-extrusion des matériaux constitutifs correspondants sous la forme de granulés de même taille, soit par un procédé de complexage du film directement issu de la co-extrusion.

Le procédé de co-extrusion par soufflage de gaine est plus particulièrement préféré, notamment pour la fabrication d'un film multicouche dans lequel l'épaisseur de la couche adhésive est comprise entre 7 et 50 µm, de préférence entre 10 et 50 µm, et encore plus préférentiellement entre 10 et 30 µm.

La présente invention concerne encore l'utilisation du film multicouche tel que décrit précédemment pour la fabrication de barquettes refermables, de préférence pour la fabrication du film d'operculage.

Les exemples suivants sont donnés à titre purement illustratif de l'invention, et ne sauraient en aucun cas être interprétés pour en limiter la portée.

### Exemple A (référence) :

### 1. Préparation d'une composition auto-adhésive thermofusible :

La composition adhésive indiquée dans le tableau suivant est préparée sous la forme d'un liquide visqueux, par simple mélange des ingrédients à 160°C au moyen d'une extrudeuse à 2 vis.

Le MFI mesuré est de 57 g/10 minutes.

### 2. Préparation d'un film tricouche :

On place environ 8 g de la composition adhésive préparée précédemment sur une feuille carrée de PET de 15 cm de côté et 50 µm d'épaisseur. On applique alors une deuxième feuille de PET dont la face destinée à être au contact de la composition adhésive est revêtue d'un enduit siliconé et qui est par ailleurs identique à la première.

On exerce sur l'ensemble, à une température de 120°C, une pression de 100 kg/cm² durant 2 minutes, au moyen d'une presse hydraulique. L'épaisseur de la couche constituée de la composition adhésive dans le film tricouche obtenu est contrôlée au pied à coulisse, et est trouvée égale à environ 250 µm.

### Test d'évaluation de l'altération du goût de beurre mis au contact de la composition adhésive:

Ce test est réalisé sur une plaquette de beurre de 125 g de dimensions 110 x 65 x 17 mm.

Cette plaquette est centrée horizontalement sur la couche adhésive d'un premier bicouche qui est obtenu en enlevant par pelage, dans le film tricouche préparé précédemment, la feuille de PET dont la face interne, au contact de la couche adhésive, est siliconée.

La face supérieure de la plaquette est ensuite recouverte d'un second bicouche identique au premier, et mise en contact avec sa couche adhésive.

La structure ainsi obtenue est suremballée dans du papier aluminium, puis placée durant 10 jours dans un réfrigérateur maintenu à 10°C.

A titre de contrôle, on procède également durant le même temps au stockage dans le même réfrigérateur d'une plaquette de beurre identique à la précédente, qui est simplement emballée dans du papier aluminium.

Au bout de 10 jours, les 2 plaquettes de beurre sont récupérées, découpées chacune en 20 morceaux de 6 g environ et transmises à un panel de 10 personnes pour évaluation du goût. Chaque membre du panel attribue, après dégustation, une note de 0 à 4 aux morceaux issus de la plaquette mise en contact avec la composition adhésive, par rapport aux morceaux issus de la plaquette de contrôle, selon le barème suivant :
0 = pas de différence perceptible
1 = différence à peine perceptible
2 = faible différence
3 = différence marquée
4 = forte différence.

La note moyenne obtenue est indiquée dans le tableau.

### Test d'évaluation de l'altération du goût de chocolat mis au contact de la composition adhésive:

Ce test est réalisé sur une tablette de chocolat au lait de dimensions : 155 x 75 x 8 mm qui est sécable en 24 carrés identiques, par simple répétition *mutatis mutandis* du protocole décrit précédemment pour la plaquette de beurre.

La notation par les membres du panel est réalisée après découpe dans la tablette de chocolat de 20 carrés, par dégustation des carrés issus de la tablette mise en contact avec la composition adhésive, par rapport aux carrés issus de la tablette de contrôle, selon le même barème.

La note moyenne obtenue est également indiquée dans le tableau.

### Mesure de la force de première ouverture par pelage à 5°C :

On prépare un nouveau film tricouche identique à celui préparé au point 2. précédent, excepté qu'aucune des 2 feuilles carrées de PET n'est revêtue d'un enduit siliconé.

On découpe dans le film ainsi obtenu une éprouvette rectangulaire de 1 cm sur 10 cm sur laquelle on procède au test de pelage à 180°. Pour cela, on décolle à partir de l'une des 2 extrémités de cette éprouvette, et sur environ 2 cm, les 2 couches de film PET comprises dans cette bande et les 2 extrémités libres obtenues sont fixées sur deux dispositifs d' attache (appelés mors) reliés, respectivement, à une partie fixe et une partie mobile d'un appareil de traction qui sont situées sur un axe vertical.

Alors qu'un mécanisme d'entraînement communique à la partie mobile une vitesse uniforme de 100 mm/minute, conduisant au décollement des 2 couches de PET dont les extrémités décollées se déplacent progressivement selon un axe vertical en formant un angle de 180°, un capteur de force relié à ladite partie mobile mesure la force supportée par l'éprouvette ainsi maintenue. L'ensemble constitué par l'éprouvette, le mors fixe et le mors mobile auxquels elle est fixée, est placé dans une enceinte thermostatique maintenue à une température de 5°C, de sorte que le décollement est effectué après stabilisation à cette température.

On obtient un résultat de 36 N/cm.

### Mesure de la force de deuxième ouverture par pelage à 5°C :

Les 2 couches de PET de l'éprouvette précédente sont, après leur décollement, repositionnées en regard l'une de l'autre et mises en contact manuellement. Elles sont alors soumises à une pression exercée au moyen d'un rouleau de masse 2 kg avec lequel on procède à un mouvement d'aller-retour selon une direction parallèle à la longueur de l'éprouvette.

On répète alors le test de pelage précédent sur le multicouche ainsi obtenu après 15 minutes de stabilisation à 5°C.

On obtient un résultat de 20 N/cm.

### Exemples 1 et 2 (selon l'invention) :

On reproduit la composition auto-adhésive thermofusible de l'exemple A en ajoutant à ses ingrédients la zéolithe Abscents^{®} 2000, les teneurs en ingrédients étant indiquées dans le tableau.

On obtient la même valeur de MFI et les mêmes résultats pour les forces de première et deuxième ouverture par pelage à 5°C.

Les notes moyennes obtenues pour les tests d'évaluation de l'altération du goût du beurre et du chocolat sont indiquées dans le tableau.

On observe globalement une forte réduction de l'altération du goût relativement à la composition de référence de l'exemple A.

### Exemples 3 et 4 (comparatifs) :

On reproduit, respectivement, les compositions des exemples 1 et 2 en remplaçant la zéolithe Abscents^{®} 2000 par la zéolithe Abscents^{®} 3000 qui est une zéolithe hydrophobe disponible auprès de la société UOP, dont le rapport molaire Si/Al est supérieur à 2000.

On obtient la même valeur de MFI et les mêmes résultats pour les forces de première et deuxième ouverture par pelage à 5°C.

Les notes moyennes obtenues pour les tests d'évaluation de l'altération du goût du beurre et du chocolat sont indiquées dans le tableau et sont globalement nettement supérieures à celles obtenues respectivement pour les exemples 1 et 2.

### Exemples 5 et 6 (comparatifs) :

On reproduit, respectivement, les compositions des exemples 1 et 2 en remplaçant la zéolithe Absents^{®} 2000 par la zéolithe Siliporite^{®} G5PTC qui est une zéolithe hydrophile disponible auprès de la société Arkema.

On obtient la même valeur de MFI et les mêmes résultats pour les forces de première et deuxième ouverture par pelage à 5°C.

Les notes moyennes obtenues pour les tests d'évaluation de l'altération du goût du beurre et du chocolat sont indiquées dans le tableau et sont globalement nettement supérieures à celles obtenues respectivement pour les exemples 1 et 2.

### Exemples 7 et 8 (comparatifs) :

On reproduit, respectivement, les compositions des exemples 1 et 2 en remplaçant la zéolithe Abscents^{®} 2000 par la zéolithe Siliporite^{®} LSX ST qui est une zéolithe hydrophile disponible auprès de la société Arkema.

On obtient la même valeur de MFI et les mêmes résultats pour les forces de première et deuxième ouverture par pelage à 5°C.

Les notes moyennes obtenues pour les tests d'évaluation de l'altération du goût du beurre et du chocolat sont indiquées dans le tableau et sont globalement nettement supérieures à celles obtenues respectivement pour les exemples 1 et 2.

**Tableau**

| Ingrédient | Teneur en % | | | | | | | | |
|---|---|---|---|---|---|---|---|---|---|
| | Ex. A (réf.) | Ex. 1 | Ex. 2 | Ex. 3 (comp.) | Ex. 4 (comp.) | Ex. 5 (comp.) | Ex. 6 (comp.) | Ex. 7 (comp.) | Ex. 8 (comp.) |
| Kraton^{®} D1113BT | 59,7 | 59,1 | 58,5 | 59,1 | 58,5 | 59,1 | 58,5 | 59,1 | 58,5 |
| Escorez^{®} 1310 LC | 24,9 | 24,6 | 24,4 | 24,6 | 24,4 | 24,6 | 24,4 | 24,6 | 24,4 |
| Dercolyte^{®} S115 | 14,9 | 14,8 | 14,6 | 14,8 | 14,6 | 14,8 | 14,6 | 14,8 | 14,6 |
| Abscents^{®} 2000 | - | 1 | 2 | - | - | - | - | - | - |
| Abscents^{®} 3000 | - | - | - | 1 | 2 | - | - | - | - |
| Siliporite^{®} G5PTC | - | - | - | - | - | 1 | 2 | - | - |
| Siliporite^{®} LSX ST | - | - | - | - | - | 1 | - | 1 | 2 |
| Irganox^{®} 1010 | 0,5 | 0,5 | 0,5 | 0,5 | 0,5 | 0,5 | 0,5 | 0,5 | 0,5 |
| | | | | | | | | | |
| Altération du goût de beurre | 3,0 | 1,6 | 1,0 | 1,8 | 3,0 | 2,4 | 2,6 | 2,7 | 3,0 |
| Altération du goût de chocolat | 2,7 | 1,5 | 0,3 | 2,0 | 2,3 | 2,5 | 1,9 | 2,7 | 2,7 |

## Revendications

1. Composition auto-adhésive thermofusible ayant un indice d'écoulement (ou MFI) allant de 0,01 à 100 g/10 minutes et comprenant :
- de 40 à 70 % d'un mélange a) de copolymères blocs styréniques comprenant au moins un bloc élastomère, ce mélange a) consistant en :
- de 30 à 90 % en poids d'au moins un copolymère dibloc choisi dans le groupe comprenant les SI, SBI, SIB, SB, SEB, et SEP, et
- de 10 à 70 % en poids d'au moins un copolymère tribloc choisi dans le groupe comprenant les SIS, SIBS, SBS, SEBS et SEPS ;
la teneur en motifs styréniques totale dudit mélange a) variant de 10 à 40 % en poids ;
- de 25 à 55 % d'une ou plusieurs résines tackifiantes b) ayant une température de ramollissement comprise entre 5 et 140 °C ; et
- de 0,1 à 5 % d'une zéolithe hydrophobe c) constituée d'un alumino-silicate hydraté d'un métal alcalin ou alcalino-terreux dont le rapport molaire Si/Al est compris dans le domaine allant de 5 à 1000 ;
les pourcentages des ingrédients a), b) et c) étant exprimés en poids et relatifs au poids total de la composition auto-adhésive.

2. Composition selon la revendication 1, **caractérisée en ce que** la teneur en dibloc dans le mélange a) peut aller 50 à 80 %.

3. Composition selon l'une des revendications 1 ou 2, **caractérisée en ce que** a) est un mélange d'un copolymère tribloc SIS et d'un copolymère dibloc SI.

4. Composition selon l'une des revendications 1 à 3, **caractérisée en ce que** la résine tackifiante b) a une masse molaire moyenne en poids M_{w} comprise entre 300 et 5000 Da et est choisie parmi :
- (i) les colophanes d'origine naturelle ou modifiées, telles que par exemple la colophane extraite de la gomme de pins, la colophane de bois extraite des racines de l'arbre et leurs dérivés hydrogénés, deshydrogénés, dimérisés, polymérisés ou estérifiés par des monoalcools ou des polyols comme le glycérol ;
- (ii) des résines obtenues par hydrogénation, polymérisation ou copolymérisation (avec un hydrocarbure aromatique) de mélanges d'hydrocarbures aliphatiques insaturés ayant environ 5, 9 ou 10 atomes de carbone issus de coupes pétrolières ;
- (iii) des résines terpéniques résultant généralement de la polymérisation d'hydrocarbures terpéniques comme par exemple le mono-terpène (ou pinène) en présence de catalyseurs de Friedel-Crafts, éventuellement modifiées par action de phénols ;
- (iv) des copolymères à base de terpènes naturels, par exemple le styrène/terpène, l'alpha-méthyl styrène/terpène et le vinyl toluène/terpène.

5. Composition selon la revendication 4, **caractérisée en ce que** la résine tackifiante b) est une résine aliphatique appartenant aux catégories (ii) ou (iii).

6. Composition selon l'une des revendications 1 à 5, **caractérisée en ce que** le rapport molaire Si/Al de la zéolithe c) est compris entre 5 et 100.

7. Composition selon l'une des revendications 1 à 6, **caractérisée en ce que** la zéolithe c) est constituée d'un alumino-silicate hydraté de sodium.

8. Composition selon l'une des revendications 1 à 7, **caractérisée en ce qu'**elle comprend :
- de 50 à 65 % du mélange a) de copolymères blocs styréniques,
- de 30 à 50 % de résine tackifiante b), et de
- de 0,5 à 4 % de zéolithe hydrophobe c).

9. Composition selon l'une des revendications 1 à 8, **caractérisée en ce qu'**elle se présente sous la forme de granulés de taille comprise entre 1 et 10 mm.

10. Film multicouche comprenant 2 couches minces de matériau thermoplastique liées entre elles par une couche continue, **caractérisé en ce que** ladite couche a une épaisseur comprise entre 7 et 300 µm et est constituée par la composition auto-adhésive thermofusible telle que définie dans l'une des revendications 1 à 8.

11. Film multicouche selon la revendication 10, **caractérisé en ce que** l'épaisseur de la couche adhésive liante est comprise entre 10 et 50 µm.

12. Film tricouche selon l'une des revendications 10 ou 11.

13. Procédé de fabrication du film multicouche tel que défini dans l'une des revendications 10 à 12, **caractérisé en ce qu'**il comprend la co-extrusion de la composition auto-adhésive thermofusible avec les matériaux des 2 couches minces adjacentes.

14. Procédé de fabrication selon la revendication 13, **caractérisé en ce que** la composition auto-adhésive thermofusible ainsi que les matériaux constitutifs des 2 couches minces sont alimentés dans le dispostif de co-extrusion sous la forme de granulés de taille comprise entre 1 et 10 mm.

15. Procédé de fabrication selon l'une des revendications 13 ou 14, **caractérisé en ce que** la co-extrusion est réalisée par soufflage de gaine.

16. Utilisation du film multicouche tel que défini dans l'une des revendications 10 à 13 pour la fabrication de barquettes refermables.

## Patentansprüche

1. Selbstklebende Schmelzklebstoffzusammensetzung, die einen Fließindex (oder MFI) von 0,01 bis 100 g/10 Minuten aufweist und Folgendes umfasst:
- 40 bis 70% einer Mischung a) von Styrol-Blockcopolymeren mit mindestens einem Elastomerblock, wobei diese Mischung a) aus Folgendem besteht:
- 30 bis 90 Gew.-% mindestens eines Zweiblockcopolymers aus der Gruppe umfassend SI, SBI, SIB, SB, SEB und SEP und
- 10 bis 70 Gew.-% mindestens eines Dreiblockcopolymers aus der Gruppe umfassend SIS, SIBS, SBS, SEBS und SEPS;
wobei der Gesamtgehalt an Styroleinheiten der Mischung a) von 10 bis 40 Gew.-% variiert;
- 25 bis 55% eines oder mehrerer Klebrigmacherharze b) mit einer Erweichungstemperatur zwischen 5 und 140 °C und
- 0,1 bis 5% eines hydrophoben Zeoliths c), der aus einem hydratisierten Aluminosilikat eines Alkali- oder Erdalkalimetalls besteht und ein Si/Al-Molverhältnis im Bereich von 5 bis 1000 aufweist; wobei die Prozentanteile der Bestandteile a), b) und c) in Gewichtsprozent und bezogen auf das Gesamtgewicht der selbstklebenden Zusammensetzung ausgedrückt sind.

2. Zusammensetzung nach Anspruch 1, **dadurch gekennzeichnet, dass** der Zweiblock-Gehalt in der Mischung a) 50 bis 80% betragen kann.

3. Zusammensetzung nach Anspruch 1 oder 2, **dadurch gekennzeichnet, dass** es sich bei a) um eine Mischung eines SIS-Dreiblockcopolymers und eines SI-Zweiblockcopolymers handelt.

4. Zusammensetzung nach einem der Ansprüche 1 bis 3, **dadurch gekennzeichnet, dass** das Klebrigmacherharz b) eine gewichtsmittlere Molmasse M_{w} zwischen 300 und 5000 Da aufweist und aus:
- (i) natürlichen oder modifizierten Kolophoniumharzen, wie beispielsweise aus dem Gummi von Kiefern extrahiertem Kolophoniumharz, aus Baumwurzeln extrahiertem Holzkolophoniumharz und hydrierten, dehydrierten, dimerisierten, polymerisierten oder mit Monoalkoholen oder Polyolen wie Glycerin veresterten Derivaten davon;
- (ii) durch Hydrierung, Polymerisation oder Copolymerisation (mit einem aromatischen Kohlenwasserstoff) von Mischungen von ungesättigten aliphatischen Kohlenwasserstoffen mit ungefähr 5, 9 oder 10 Kohlenstoffatomen, die aus Erdölfraktionen stammen, erhaltenen Harzen;
- (iii) gegebenenfalls durch Einwirkung von Phenolen modifizierten Terpenharzen, die im Allgemeinen bei der Polymerisation von Terpen-Kohlenwasserstoffen wie beispielsweise Monoterpen (oder Pinen) in Gegenwart von Friedel-Crafts-Katalysatoren anfallen; und
- (iv) Copolymeren auf Basis von natürlichen Terpenen, beispielsweise Styrol/Terpen, alpha-Methylstyrol/Terpen und Vinyltoluol/Terpen
ausgewählt ist.

5. Zusammensetzung nach Anspruch 4, **dadurch gekennzeichnet, dass** es sich bei dem Klebrigmacherharz b) um ein aliphatisches Harz der Kategorien (ii) oder (iii) handelt.

6. Zusammensetzung nach einem der Ansprüche 1 bis 5, **dadurch gekennzeichnet, dass** das Si/Al-Molverhältnis des Zeoliths c) zwischen 5 und 100 liegt.

7. Zusammensetzung nach einem der Ansprüche 1 bis 6, **dadurch gekennzeichnet, dass** der Zeolith c) aus einem hydratisierten Natriumaluminosilikat besteht.

8. Zusammensetzung nach einem der Ansprüche 1 bis 7, **dadurch gekennzeichnet, dass** sie Folgendes umfasst:
- 50 bis 65% der Mischung a) von Styrol-Blockcopolymeren,
- 30 bis 50% Klebrigmacherharz b) und
- 0,5 bis 4% hydrophoben Zeolith c).

9. Zusammensetzung nach einem der Ansprüche 1 bis 8, **dadurch gekennzeichnet, dass** sie in Form von Granulat mit einer Größe zwischen 1 und 10 mm vorliegt.

10. Mehrschichtfolie, umfassend 2 dünne Schichten aus thermoplastischem Material, die durch eine kontinuierliche Schicht miteinander verbunden sind, **dadurch gekennzeichnet, dass** die Schicht eine Dicke zwischen 7 und 300 µm aufweist und aus der selbstklebenden Schmelzklebstoffzusammensetzung gemäß einem der Ansprüche 1 bis 8 besteht.

11. Mehrschichtfolie nach Anspruch 10, **dadurch gekennzeichnet, dass** die Dicke der verbindenden Klebstoffschicht zwischen 10 und 50 µm liegt.

12. Dreischichtfolie nach Anspruch 10 oder 11.

13. Verfahren zur Herstellung der Mehrschichtfolie gemäß einem der Ansprüche 10 bis 12, **dadurch gekennzeichnet, dass** es einen Schritt der Coextrusion der selbstklebenden Schmelzklebstoffzusammensetzung mit den Materialien der 2 benachbarten dünnen Schichten umfasst.

14. Herstellungsverfahren nach Anspruch 13, **dadurch gekennzeichnet, dass** die selbstklebende Schmelzklebstoffzusammensetzung sowie die Materialien, aus denen die 2 dünnen Schichten bestehen, in Form von Granulat mit einer Größe zwischen 1 und 10 mm in die Coextrusionsvorrichtung eingebracht werden.

15. Herstellungsverfahren nach Anspruch 13 oder 14, **dadurch gekennzeichnet, dass** die Coextrusion durch Blasformen erfolgt.

16. Verwendung der Mehrschichtfolie gemäß einem der Ansprüche 10 bis 13 zur Herstellung von wiederverschließbaren Schalen.

## Claims

1. Hot-melt pressure-sensitive adhesive composition having a melt flow index (or MFI) ranging from 0.01 to 100 g/10 minutes and comprising:
- from 40% to 70% of a mixture a) of styrene block copolymers comprising at least one elastomeric block, this mixture a) consisting of:
- from 30% to 90% by weight of at least one diblock copolymer chosen from the group comprising SI, SBI, SIB, SB, SEB and SEP, and
- from 10% to 70% by weight of at least one triblock copolymer chosen from the group comprising SIS, SIBS, SBS, SEBS and SEPS;
the total content of styrene units in said mixture a) ranging from 10% to 40% by weight;
- from 25% to 55% of one or more tackifying resins b) with a softening point of between 5 and 140°C; and
- from 0.1% to 5% of a hydrophobic zeolite c) consisting of a hydrated aluminosilicate of an alkali metal or alkaline-earth metal in which the Si/Al mole ratio is in the range from 5 to 1000;
the percentages of ingredients a), b) and c) being expressed by weight and relative to the total weight of the pressure-sensitive adhesive composition.

2. Composition according to Claim 1, **characterized in that** the content of diblock in mixture a) may range from 50% to 80%.

3. Composition according to either of Claims 1 and 2, **characterized in that** a) is a mixture of an SIS triblock copolymer and of an SI diblock copolymer.

4. Composition according to one of Claims 1 to 3, **characterized in that** the tackifying resin b) has a weight-average molar mass M_{w} of between 300 and 5000 Da and is chosen from:
- (i) rosins of natural or modified origin, for instance rosin extracted from pine gum, wood rosin extracted from tree roots and derivatives thereof that have been hydrogenated, dehydrogenated, dimerized, polymerized or esterified with monoalcohols or polyols such as glycerol;
- (ii) resins obtained by hydrogenation, polymerization or copolymerization (with an aromatic hydrocarbon) of unsaturated aliphatic hydrocarbon mixtures containing about 5, 9 or 10 carbon atoms derived from petroleum fractions;
- (iii) terpene resins generally resulting from the polymerization of terpene hydrocarbons, for instance monoterpene (or pinene) in the presence of Friedel-Crafts catalysts, optionally modified via the action of phenols;
- (iv) copolymers based on natural terpenes, for example styrene/terpene, α-methylstyrene/terpene and vinyltoluene/terpene.

5. Composition according to Claim 4, **characterized in that** the tackifying resin b) is an aliphatic resin belonging to category (ii) or (iii).

6. Composition according to one of Claims 1 to 5, **characterized in that** the Si/Al mole ratio of zeolite c) is between 5 and 100.

7. Composition according to one of Claims 1 to 6, **characterized in that** zeolite c) consists of a hydrated sodium aluminosilicate.

8. Composition according to one of Claims 1 to 7, **characterized in that** it comprises:
- from 50% to 65% of the mixture a) of styrene block copolymers,
- from 30% to 50% of tackifying resin b), and
- from 0.5% to 4% of hydrophobic zeolite c).

9. Composition according to one of Claims 1 to 8, **characterized in that** it is in the form of granules between 1 and 10 mm in size.

10. Multilayer film comprising two thin layers of thermoplastic material linked together by a continuous layer, **characterized in that** said layer has a thickness of between 7 and 300 µm and consists of the hot-melt pressure-sensitive adhesive composition as defined in one of Claims 1 to 8.

11. Multilayer film according to Claim 10, **characterized in that** the thickness of the binding adhesive layer is between 10 and 50 µm.

12. Three-layer film according to either of Claims 10 and 11.

13. Process for manufacturing the multilayer film as defined in one of Claims 10 to 12, **characterized in that** it comprises the coextrusion of the hot-melt pressure-sensitive adhesive composition with the materials of the two adjacent thin layers.

14. Manufacturing process according to Claim 13, **characterized in that** the hot-melt pressure-sensitive adhesive composition and the constituent materials of the two thin layers are fed into the coextrusion device in the form of granules between 1 and 10 mm in size.

15. Manufacturing process according to either of Claims 13 and 14, **characterized in that** the coextrusion is performed by film blowing.

16. Use of the multilayer film as defined in one of Claims 10 to 13 for manufacturing reclosable trays.
